# EUROPÄISCHE PATENTSCHRIFT

(11) **EP 4 419 995 B1**
(45) Veröffentlichungstag und Bekanntmachung des Hinweises auf die Patenterteilung: **04.02.2026**
(21) Anmeldenummer: 22793747.1
(22) Anmeldetag: 28.09.2022
(51) Int. Cl.: G06F 9/448

(54) **VERFAHREN ZUR VERARBEITUNG VON DATEN MIT EINEM DATENVERARBEITUNGSNETZWERK UMFASSEND EINE MEHRZAHL VON DATENVERARBEITUNGSMODULEN, DATENVERARBEITUNGSMODUL UND DATENVERARBEITUNGSNETZWERK**
METHOD FOR PROCESSING DATA USING A DATA PROCESSING NETWORK COMPRISING A PLURALITY OF DATA PROCESSING MODULES, DATA PROCESSING MODULE AND DATA PROCESSING NETWORK
PROCÉDÉ DE TRAITEMENT DE DONNÉES À L'AIDE D'UN RÉSEAU DE TRAITEMENT DE DONNÉES COMPRENANT UNE PLURALITÉ DE MODULES DE TRAITEMENT DE DONNÉES, MODULE DE TRAITEMENT DE DONNÉES ET RÉSEAU DE TRAITEMENT DE DONNÉES

(30) Priorität: 18.10.2021 DE 102021211731
(43) Veröffentlichungstag der Anmeldung: 28.08.2024
(73) Patentinhaber: Robert Bosch GmbH, 70442 Stuttgart (DE)
(72) Erfinder: DIZIOL, Raphael, 76870 Kandel (DE); EGENTER, Stefan, 79108 Freiburg (DE); POEHNL, Michael, 75449 Wurmberg (DE)
(86) Internationale Anmeldenummer: PCT/EP2022/076949
(87) Internationale Veröffentlichungsnummer: WO 2023/066626

(56) Entgegenhaltungen:
- WO-A1-2015/177639
- PACT INFORMATIONSTECHNOLOGIE GMBH: "THE XPP WHITE PAPER - RELEASE 2.1", INTERNET CITATION, 1 January 2002 (2002-01-01), XP002345999, Retrieved from the Internet <URL:http://www.pactcorp.com/xneu/download/xpp_white_paper.pdf> [retrieved on 20050921]
- ANONYMOUS: "IEEE 1284 - Wikipedia", 5 June 2021 (2021-06-05), XP093017634, Retrieved from the Internet <URL:https://de.wikipedia.org/w/index.php?title=IEEE_1284&oldid=212699270> [retrieved on 20230125]

## Beschreibung

### Stand der Technik

Systeme für Fahrerassistenz oder automatisiertes Fahren bestehen aus vielen einzelnen Software-Einheiten, die in der Regel bzgl. des Datenflusses mit Graphen beschrieben werden können. Diese Software-Einheiten (oft auch Runnables, Nodes oder Datenverarbeitungskomponenten genannt) zeichnen sich dadurch aus, dass eine Menge von Eingangsdaten verarbeitet werden und daraus eine Menge von Ausgangsdaten erzeugt werden.

Ein solcher Graph eines Systems von Datenverarbeitungskomponenten visualisiert eine statische Sicht auf den Datenfluss durch das System.

Die verschiedenen Software-Einheiten bilden regelmäßig ein komplexes Datenverarbeitungsnetzwerk mit welchem Sensordaten verarbeitet werden, um basierend auf den Sensordaten Aktionen durchzuführen, wobei solche Aktionen beispielsweise Steuerungsaufgaben im Rahmen eines autonomen Fahrbetriebs eines Fahrzeugs sein können. Die Datenverarbeitung in dem Datenverarbeitungsnetzwerk umfasst üblicherweise eine Mehrzahl von aufeinander aufbauenden Datenverarbeitungsschritten oder Datenverarbeitungsaufgaben, die mit den Datenverarbeitungskomponenten ausgeführt werden.

Die Ausführung bzw. Aktivierung einer Datenverarbeitungsaufgabe hängt in einem solchen Datenverarbeitungsnetzwerk üblicherweise von einer entsprechenden Bedingung ab, in die Stimuli wie Zeitschritte oder das Eintreffen von Daten eingehen können. Der Kontrollfluss, der die Ausführung der Datenverarbeitungskomponenten festlegt, wird in der Regel aus dem Datenfluss abgeleitet.

Es gibt datengetriebene Ansätze, bei denen sich die Ausführung der Datenverarbeitungsaufgaben bzw. der Datenverarbeitungskomponenten am Datenfluss orientieren.

Darüber hinaus gibt es Ansätze, die eine zeitgetriebene Ausführung der Datenverarbeitungsaufgaben bzw. der Datenverarbeitungskomponenten anwenden. Solche Ansätze wurden in den letzten Jahren angereichert mit Konzepten der Worst-Case-Execution-Time (längstmögliche Ausführungsdauer)
Bei einem strikt datengetriebenen Ansatz wird die Ausführung einer Datenverarbeitungsaufgaben bzw. einer Datenverarbeitungskomponente durch das Eintreffen eines Datenpakets ausgelöst. Das Versenden von Datenpaketen in der Ausführung einer Datenverarbeitungskomponente kann bei entsprechendem Graphen zur sofortigen Ausführung einer davon abhängigen Datenverarbeitungskomponente führen. Es ist sogar eine mehrfache parallele Ausführung einer Datenverarbeitungskomponente denkbar, falls neue Datenpakete eintreffen, während eine Datenverarbeitungskomponente noch ausgeführt wird. Eine solches System weist eine geringe Latenz auf, aber eine hohe Anzahl an möglichen Zuständen.

Aus der WO 2015/177639 A1 sind Verfahren und Datenverarbeitungsnetzwerke zur Echtzeitverarbeitung von Daten bekannt, bei denen die Datenverarbeitung mit einer Mehrzahl von aufeinander aufbauenden Datenverarbeitungsmodulen und Datenverarbeitungskomponenten erfolgt.

### Offenbarung der Erfindung

Vor diesem Hintergrund soll hier ein Verfahren zur Datenverarbeitung beschrieben werden, welches das Ziel hat, die Reproduzierbarkeit einer Datenverarbeitung bei gleichzeitiger hoher Leistungsfähigkeit zu realisieren. Insbesondere soll die mehrfache, parallele Ausführung einer Datenverarbeitungskomponente ermöglicht werden und gleichzeitig die Anzahl an möglichen Zuständen kontrollierbar bzw. überwachbar bleiben.

Hier soll ein Verfahren gemäß Anspruch 1 beschrieben werden.

Durch das Verfahren soll insbesondere das Problem gelöst werden, dass eine Vorhersagbarkeit und Reproduzierbarkeit bei klassischem Ansatz sehr schwierig zu realisieren ist. Dies erschwert die Umsetzung von Safety-Maßnahmen, wie z.B. einen SW-Lockstep, bei dem die gleiche Software simultan auf zwei µ-Prozessoren ausgeführt wird. Auch ein möglichst getreues Nachrechnen einer aufgezeichneten Fahrsituation (Re-compute) ist schwierig, da mit einem anderen Laufzeitverhalten und somit möglicherweise einem anderen Ergebnis zu rechnen ist.

Die Grundlage des hier beschriebenen Verfahrens ist, dass eine Vielzahl von Datenverarbeitungskomponenten eines Datenverarbeitungsnetzwerks jeweils zu sogenannten Datenverarbeitungsmodulen zusammengefasst werden und so eine zusätzliche übergeordnete Struktur des Datenverarbeitungsnetzwerks entsteht. Auf der Ebene dieser Struktur werden jeweils Eingangsdaten und Ausgangsdaten der einzelnen Datenverarbeitungskomponenten innerhalb des Moduls zusammengefasst und der Datenfluss wird durch das Datenverarbeitungsnetzwerk auf dieser Ebene gesteuert bzw. kontrolliert.

In der Automobilbranche mit einem hohen Anteil an Regelungstechnik war bisher immer eine Ausführung in Zeitscheiben dominierend (z.B. 10ms, 20ms, 100ms Tasks). Insbesondere, wenn als Hardware zur Ausführung der Datenverarbeitung mit derartigen Datenverarbeitungsnetzwerken allerdings multi-core Systeme verwendet werden, treten zusätzliche Probleme auf. Insbesondere auf multi-core-Systemen treten schwankende Laufzeiten der Datenverarbeitungskomponenten eines Datenverarbeitungsnetzwerks auf. Durch solche schwankenden Laufzeiten wird die Zuordnung von Ausgangsdaten einer Datenverarbeitungskomponente als Eingangsdaten weiterer Datenverarbeitungskomponenten erschwert bzw. nicht mehr vorhersagbar. Diese Vorhersagbarkeit kann ggf. wieder verbessert werden - beispielsweise mit Konzepten der maximalen möglichen Ausführungszeit/Bearbeitungszeit. Solche Konzepte verschlechtern aber die Auslastbarkeit der Hardware (des multi-core Systems). Die Hardware muss erheblich größer dimensioniert werden.

Insbesondere durch Anwendungen der hochkomplexen Fahrerassistenz bzw. bei Anwendungen des automatisierten Fahrens wird die Menge an zu verarbeiteten Daten von Sensoren drastisch erhöht. Die erforderliche Reaktionszeit solcher Systeme ist aber vergleichbar oder sogar noch niedriger als bei klassischen Fahrerassistenzanwendungen. D.h. es müssen mehr und rechenaufwendigere Berechnungen in einer längeren Verarbeitungskette in einer vergleichbaren Zeitspanne durchgeführt werden. Dies führt bei den vorhandenen zeitgetriebenen Ansätzen zu einer nicht akzeptablen Latenz, da sich die zusätzliche Latenz durch die Übergänge zwischen den einzelnen Zeitscheiben in der gesamten Kette aufsummiert.

Das vorgestellte Verfahren ermöglicht es, Ansätze aus der datengetriebenen Ausführung mit Errungenschaften der zeitgetriebenen Ausführung von Datenverarbeitungskomponenten zu kombinieren. Damit können Datenverarbeitungsnetzwerke so betrieben werden, dass eine niedrigere Latenz (bessere Leistungsfähigkeit) auftritt als bei rein zeitgetriebenen Systemen und eine bessere Reproduzierbarkeit als bei strikt datengetriebenen Systemen. Dies ermöglicht die hohen Anforderungen bzgl. Latenz in einem System für das automatisiere Fahren zu erfüllen und gleichzeitig ein System zu haben, das eine Ausführung im SW-Lockstep und eine exakte Reproduzierbarkeit im Re-compute ermöglicht. Für Schritt b) kann ein geeigneter Stimulus festgelegt werden, der die Durchführung der Datenverarbeitung in Schritt c) festlegt, wobei dann auf die Eingangsdaten zurückgegriffen wird, die in Schritt a) empfangen werden. Die Ausgangsdaten werden mit Schritt d) dann für nachfolgende Verarbeitungsschritte bereitgestellt. Wenn das jeweilige Datenverarbeitungsmodul das letzte Datenverarbeitungsmodul in einem Datenverarbeitungsnetzwerk ist, dann können die Daten auch als Netzwerksausgangsdaten oder Systemausgangsdaten bezeichnet werden, die dann beispielsweise gleichzeitig Eingangsdaten einer Steuerung sind, welche diese Daten verarbeitet bzw. für eine Anwendung berücksichtigt.

Durch das beschriebene Verfahren ist sowohl eine zeit- als auch eine datengetriebene Ausführung der Datenverarbeitungsaufgaben möglich. Der eigentliche Start der Datenverarbeitung erfolgt, wenn in Schritt b) der Stimulus empfangen wird. Die Daten werden für die Datenverarbeitungskomponenten mit dem Eintreffen des Stimulus gewissermaßen sichtbar. Zeitlich zusammengehörende Datenstrukturen werden also gemeinsam zwischen Datenverarbeitungsmodulen übertragen. Die Bereitstellung von Daten für die Datenverarbeitungskomponenten erfolgt anhand der in einer übergeordneten Struktur bereitgestellten Datenverarbeitungsmodule. Die Struktur der übergeordneten Datenverarbeitungsmodule und die Tatsache, dass die Bereitstellung von Daten auf dieser Ebene erfolgt, reduzieren die Anzahl der Systemzustände des gesamten Datenverarbeitungsnetzwerks deutlich.

Es kann auch sein, dass zu dem Zeitpunkt zu dem in Schritt b) ein Stimulus zur Aktivierung der Datenverarbeitungskomponente empfangen wird, noch keine Eingangsdaten oder noch keine neuen Eingangsdaten (seit der letzten Verarbeitung der jeweiligen Datenverarbeitungsaufgabe vorliegen). Das Verfahren kann dann so eingerichtet sein, dass die Datenverarbeitungsaufgabe dann nicht erneut durchgeführt und dann einfach bis zum nächsten Empfangen eines Stimulus abgewartet wird. In Ausführungsvarianten des Verfahrens kann auch eine Fehlerausgabe, bspw. an eine zentrale Stelle erfolgen.

In Schritt b) wird vor der Ausführung der Datenverarbeitungsaufgabe eine Pipelinestufe der jeweiligen Datenverarbeitungskomponente zugeordnet, in der die Datenverarbeitungsaufgabe dann mit den jeweils vorgesehenen Eingangsdaten ausgeführt wird. Die Pipelinestufe ist wie eine Art Instanz der Datenverarbeitungsaufgabe bspw. mit einem reservierten Speicherbereich auf einem Mikroprozessor und gegebenenfalls auch reservierten Rechenkapazitäten auf einem Mikroprozessor. Bevorzugt existiert für jede Datenverarbeitungskomponente eine bestimmte Anzahl an Pipelinestufen, in welchen eine Datenverarbeitungsaufgabe parallel (zeitlich überlappendend, jedoch gegebenenfalls versetzt zueinander beginnend und endend) ausgeführt werden können. Die Anzahl Pipelinestufen gibt den Grad der möglichen Parallelität an.

Bevorzugt erfolgt die Zuordnung einer Pipelinestufe nur, wenn auch eine freie Pipelinestufe vorhanden ist, in welcher gerade keine Datenverarbeitungsaufgabe stattfindet. Werden Stimuli so schnell wiederholt hintereinander empfangen, dass keine freie (bereits beendete) Pipelinestufe vorhanden ist, so wird bevorzugt gewartet bzw. der Start der Datenverarbeitungsaufgabe wird auf später verschoben.

Die Verwendung von Pipelinestufen ist insbesondere nützlich, um bei rechenzeitintensive Datenverarbeitungsaufgaben möglichst früh aktuelle Ausgangsdaten zu erhalten, weil in einer Pipelinestufen bereits eine erneute Durchführung der Datenverarbeitungsaufgabe gestartet werden kann, wenn eine zuvor gestartete Durchführung einer Datenverarbeitungsaufgabe in einer anderen Pipelinestufe noch nicht abgeschlossen ist.

In diesem Zusammenhang ist es auch besonders vorteilhaft, wenn die Verfahrensschritte a) bis d) mehrfach wiederholt derart ausgeführt werden, dass in mehreren Pipelinestufen die Datenverarbeitungsaufgabe in Verfahrensschritt c) versetzt parallel zueinander ausgeführt wird.

Besonders bevorzugt ist, wenn nach Schritt d) noch folgender Schritt durchgeführt wird:
e) Bereitstellung eines Validierungsdatensatzes bestehend aus dem Satz von Eingangsdaten, dem Stimulus und/oder den Ausgangsdaten zur Validierung der Durchführung der mindestens einen Datenverarbeitungsaufgabe mit der mindestens einen Datenverarbeitungskomponente.

Bevorzugt ist, wenn der Validierungsdatensatz zusätzlich mindestens eine Zeitinformation beinhaltet, welche einen Zeitpunkt des Stimulus und/oder eine Zeitinformation über die Bearbeitung der mindestens einen Datenverarbeitungsaufgabe ermöglicht.

Eine Solche Zeitinformation kann beispielsweise durch das Aufzeichnen von Start und Ende der Ausführungen der Datenverarbeitungsaufgaben erfolgen. So können die verarbeiteten Eingangsdaten und die erzeugten Ausgangsdaten auf einem gemeinsamen logischen Zeitstrahl dargestellt werden und es werden Prüfberechnungen des beschriebenen Verfahrens ermöglicht.

Es ist möglich, dass ein Datenverarbeitungsmodul, welches Ausgangsdaten eines weiteren Datenverarbeitungsmoduls als Eingangsdaten verarbeitet, mit der Verarbeitung startet, wenn ein Stimulus als Aktivierung auftritt. Somit wird im Vergleich zum zeitgetriebenen Ansatz die zusätzliche Latenz durch WCET und bis zum Start der Zeitscheibe des empfangenden Datenverarbeitungsmoduls vermieden.

Durch das hier beschriebene Verfahren wird eine Reproduzierbarkeit der Durchführung der einzelnen Datenverarbeitungsaufgaben erreicht, weil die Information bezüglich der jeweils verarbeiteten Eingangsdaten reproduzierbar ist.

Ein Datenverarbeitungsmodul hat in dem vorgestellten Verfahren während einer Ausführung (Durchführung von Schritt c) immer eine eingefrorene Sicht auf die Welt bzw. auf die Eingangsdaten, welche verarbeitet werden. Die Eingangsdaten ändern sich während einer Ausführung des Verfahrens nicht. Dies wird erreicht, indem die eintreffenden Eingangsdaten in Schritt a) gesammelt werden, die Daten kontrolliert und in logischer Zeit atomar weitergeben werden können. Um die Ausgangsdaten eines Datenverarbeitungsmoduls konsistent in Bezug auf deren Ausführung durch andere Datenverarbeitungsmodule zu verarbeiten, werden die Ausgangsdaten bevorzugt ebenfalls gesammelt.

Erfindungsgemäß ist, wenn zur Erzeugung des in Schritt b) verwendeten Stimulus zumindest ein Zeitgeber verwendet wird, der ein Zeitraster zur regelmäßigen Wiederholung der Durchführung der Datenverarbeitungsaufgaben mit den Datenverarbeitungskomponenten vorgibt.

Der Zeitgeber kann beispielsweise ein entsprechender Baustein auf einer Hardware sein, auf welcher das Datenverarbeitungsnetzwerk betrieben wird und welcher für jedes Datenverarbeitungsmodul in regelmäßigen Abständen ein Zeitgebersignal abgibt, welches den Stimulus bildet und eine Durchführung des Verfahrens auslöst.

Erfindungsgemäß ist außerdem, wenn zur Erzeugung des in Schritt b) verwendeten Stimulus zumindest ein Verfügbarkeitssignal verwendet wird, welches die Verfügbarkeit von Daten anzeigt. Dieses Verfügbarkeitssignal kann beispielsweise von einer vorangegangenen Ausführung des beschriebenen Verfahrens in einem anderen Datenverarbeitungsmodul hervorgerufen worden sein.

Erfindungsgemäß ist außerdem, wenn der Stimulus von einer Kombination bestehend aus Zeitgeber und Verfügbarkeitssignal gebildet wird. Immer dann, wenn neue Daten über ein Verfügbarkeitssignal angezeigt werden, wird das Datenverarbeitungsmodul in die Bereitschaft versetzt, auf den Zeitgeber zu reagieren. Nur wenn sowohl der Zeitgeber als auch das (mindestens eine) Verfügbarkeitssignal anzeigen, dass mit einer Datenverarbeitung gestartet werden soll, erfolgt die Datenverarbeitung in den Datenverarbeitungskomponenten des jeweiligen Datenverarbeitungsmoduls (Schritt c)).

Besonders bevorzugt ist, wenn Schritt a) mit einem Eingangsdatenempfangsmodul des Datenverarbeitungsmoduls durchgeführt wird, welches einen Eingabespeicher zur Zwischenspeicherung von noch nicht vollständigen Eingangsdaten aufweist und welches eine Vollständigkeitsprüfung des Satzes von Eingangsdaten durchführt .

In diesem Zusammenhang besonders bevorzugt ist, wenn ein Eingabespeicher des Eingangsdatenempfangsmoduls mehrere Eingangsstufen zur Ablage von Eingangsdaten aufweist, wobei zwischen dem Empfang von verschiedenen Eingangsdaten ein Wechsel der Eingangsstufe erfolgt, so dass in dem Eingangsdatenempfangsmodul eine Reihe von zuletzt empfangenen von Eingangsdaten zur Verfügung steht, wobei mindestens ein Satz von Eingangsdaten durch einen Zugriff auf in dem Eingangsspeicher hinterlegte Eingangsdaten als Folge des Empfangs eines Stimulus in Schritt b) festgelegt wird.

Ein Zugriff kann erfolgen, wenn in Schritt b) ein Stimulus empfangen wird.

Mit dem Eintreffen des Stimulus wird eine Sicht auf die Eingangsdaten gebildet. Es wird ein Satz von Eingangsdaten festgelegt, der in der jeweiligen Pipelinestufe verarbeitet wird. Dieser Satz von Eingangsdaten kann parallel auch abgelegt werden, so dass die Ausführung der Datenverarbeitungsaufgabe mit der Datenverarbeitungskomponente nachvollziehbar ist.

Es sind verschiedene Arbeitsweisen mit den Eingangsstufen des Eingabespeichers möglich. Es ist möglich, dass bei einem Eintreffen eines Stimulus immer nur die neuesten, noch nicht der Datenverarbeitungsaufgabe zugeführten Eingangsdaten aus der Reihe von zuletzt empfangenen Eingangsdaten verarbeitet werden. Es ist auch möglich, dass (einzelne) Eingangsdaten aus der Reihe von Eingangsdaten mehrfach verarbeitet werden, so dass die Datenverarbeitungsaufgabe immer für ein gleitendes Fenster von Eingangsdaten (bspw. N Sätze von Eingangsdaten zurückblickend) ausgeführt wird.

Auch bevorzugt ist es, wenn die mindestens eine Datenverarbeitungskomponente dazu eingerichtet ist eine Reine von zuletzt empfangenen Eingangsdaten als Satz von Eingangsdaten zusammen zu verarbeiten, um Ausgangsdaten zu erzeugen.

Bevorzugt ist eine Eingangsstufe über einen Eingangsstufenindex ansprechbar, welcher ausgelöst durch den Empfang eines Stimulus in Schritt b) modifiziert wird.

Der Eingangsstufenindex wird bspw. jedes mal, wenn ein Stimulus empfangen wird, inkrementiert.

Außerdem bevorzugt ist, wenn Schritt d) mit einem Ausgangsdatenbereitstellungsmodul durchgeführt wird, welches einen Ausgabespeicher aufweist, in welchem eine Zwischenspeicherung von noch nicht vollständigen Ausgangsdaten erfolgt.

In diesem Zusammenhang ist es besonders vorteilhaft, wenn der Ausgabespeicher des Ausgangsdatenbereitstellungsmoduls mehrere Ausgangsstufen zur Ablage eines Satzes von Ausgangsdaten aufweist.

Bevorzugt weist das Datenverarbeitungsmodul also spezielle Gates auf (Eingangsdatenempfangsmodul = Input-gate und Ausgangsdatenbereitstellungsmodul = Output-gate), um die Datenverarbeitungsaufgabe durchzuführen.

Durch diese Gates kann eine steuernde Einheit den Datenfluss zwischen den Datenverarbeitungsmodulen kontrollieren. Wenn die steuernde Einheit nun das Starten und das Ende der Ausführungen der Datenverarbeitungsmodule mit dem Weiterreichen von Daten über die Gates synchronisiert, kann gesteuert werden, welches Datenverarbeitungsmodul wann mit welchen Daten ausgeführt wird. Um über das Starten eines Datenverarbeitungsmoduls zu entscheiden, wird der zuvor erwähnte Stimulus ausgewertet.

In Ausführungsvarianten werden in Schritt d) bereitgestellte Ausgangsdaten zumindest teilweise als Eingangsdaten für eine erneute Durchführung der Verfahrensschritte a) bis d) (und ggf. auch Schritt e)) mit demselben Datenverarbeitungsmodul verwendet.

Hierdurch wird eine Art Rückkopplung beschrieben, welche es einem Datenverarbeitungsmodul ermöglicht, historische Daten aus einer vorherigen Ausführung eines Datenverarbeitungsmoduls zu verarbeiten. Solche Rückkopplungen ermöglichen eine gewisse Art an Erinnerungsvermögen in einem Datenverarbeitungsnetzwerk.

Sollte es eine Rückkopplung innerhalb der Rechenschritte eines Datenverarbeitungsmoduls geben, so wird dieser Datenpfad so gestaltet, dass dieser über das jeweilige Eingangsdatenempfangsmodul und das jeweilige Ausgangsdatenempfangsmodul des Datenverarbeitungsmoduls realisiert wird.

Bevorzugt ist, wenn in Schritt d) bereitgestellte Ausgangsdaten Teildatenmengen umfassen, die von verschiedenen Datenverarbeitungskomponenten des Datenverarbeitungsmoduls bei der Durchführung der Datenverarbeitungsaufgaben erzeugt werden, wobei die Bereitstellung der Ausgangsdaten in Schritt d) erst erfolgt, wenn alle die Ausgangsdaten bildenden Teildatenmengen verfügbar sind.

Teildatenmengen entstehen beispielsweise, weil die Datenverarbeitungsaufgaben verschiedener Datenverarbeitungskomponenten innerhalb des Datenverarbeitungsmoduls unterschiedlich lange Verarbeitungszeiten haben. Durch das Sammeln der Teildatenmengen, bis die Ausgangsdaten vollständig verfügbar sind und durch die gemeinsame Bereitstellung aller Teildatenmengen wird das Nachvollziehen, wann welche Daten während der Datenverarbeitung mit dem Datenverarbeitungsnetzwerk verfügbar waren, erheblich vereinfacht.

Auch bevorzugt ist, wenn in Schritt d) zusätzlich ein Verfügbarkeitssignal erzeugt wird, anhand von welchem erkennbar ist, dass Ausgangsdaten zur weiteren Verarbeitung bereitgestellt wurden.

Wie weiter oben schon beschrieben, kann ein solches Verfügbarkeitssignal als Stimulus für weitere Ausführungen des beschriebenen Verfahrens dienen.

Besonders bevorzugt ist, wenn während Schritt c) optional folgender Schritt durchgeführt wird:
Abbruch der Durchführung der Datenverarbeitungsaufgabe in einer Instanz, und
Neustart von Schritt c) mit anderen Eingangsdaten, wenn ein Abbruchsignal empfangen wurde.

Eine solche Vorgehensweise bietet sich insbesondere dann an, wenn die Anzahl an zur Verfügung stehenden Pipelinestufen ausgeschöpft ist bzw. alle Pipelinestufen mit der Ausführung der Datenverarbeitungsaufgabe belegt sind, jedoch neue Eingangsdaten eingetroffen sind und der Verarbeitung dieser neuen Eingangsdaten eine höhere Bedeutung zugemessen wird als dem Abschluss der aktuellen Ausführungen von Datenverarbeitungsaufgaben in den Pipelinestufen.

Außerdem bevorzugt ist, wenn während der Durchführung des Verfahrens eine permanente Aufzeichnung von zumindest einer der folgenden Informationen für eine spätere Weiterverarbeitung erfolgt:
- in Schritt a) empfangene Sätze von Eingangsdaten;
- in Schritt b) empfangene Stimuli;
- in Schritt d) bereitgestellte Ausgangsdaten; und
- in Schritt d) bereitgestellte Verfügbarkeitssignale.

Besonders bevorzugt ist, wenn bei der Aufzeichnung zusätzlich die Ablage von Zeitinformationen erfolgt, welche die zeitliche Zuordnung der Verfahrensdurchführung zu einem Zeitstrahl ermöglicht.

Eine solche Aufzeichnung kann beispielsweise in einem zusätzlichen Debug-Datenspeicher erfolgen, um nachträglich Debug-Aufgaben durchzuführen, bei denen ggf. Fehler in den einzelnen Datenverarbeitungskomponenten untersucht werden können. Eine solche Aufzeichnung kann auch in einem fertigen im Einsatz befindlichen System genutzt werden, um durch eine nachträgliche Überprüfung insbesondere Hardware-bedingte Fehler in der Ausführung der Datenverarbeitungsaufgaben zu erkennen und daraufhin Korrekturaufgaben auszuführen.

Hier auch beschrieben werden soll ein Datenverarbeitungsmodul für ein Datenverarbeitungsnetzwerk zur Durchführung des beschriebenen Verfahrens aufweisend ein Eingangsdatenempfangsmodul, welchem ein Eingabespeicher zugeordnet ist und ein Ausgangsdatenbereitstellungsmodul, welchem ein Ausgabespeicher zugeordnet ist, sowie weiter aufweisend mindestens eine Datenverarbeitungskomponente zur Durchführung einer Datenverarbeitungsaufgabe basierend auf den Eingangsdaten in dem Eingabespeicher und zur Erzeugung von Ausgangsdaten zur Ablage in dem Ausgabespeicher.

Besonders vorteilhaft ist, wenn zumindest der Eingabespeicher oder der Ausgabespeicher mehrere Stufen zur Ablage eines Satzes von Eingangsdaten oder Ausgangsdaten aufweisen.

Darüber hinaus soll ein Datenverarbeitungsnetzwerk umfassend eine Mehrzahl von derartigen Datenverarbeitungsmodulen beschrieben werden
Die vorstehend gelieferten Erläuterungen zum Verfahren sind auf das Datenverarbeitungsmodul und das Datenverarbeitungsnetzwerk übertragbar und anwendbar.

Das Verfahren wird nachfolgend anhand der Figuren näher erläutert. Es zeigen:
- Fig. 1:: ein Fahrzeug, in welchem ein beschriebenes Datenverarbeitungsnetzwerk verwendet wird und in welchem das beschriebene Verfahren angewendet wird;
- Fig. 2:: ein Datenverarbeitungsmodul zur Durchführung des beschriebenen Verfahrens;
- Fig. 3:: ein Ablaufdiagramm der Ausführung von Datenverarbeitungsaufgaben in verschiedenen Pipelinestufen;
- Fig. 4:: eine weitere Darstellung eines Datenverarbeitungsmoduls zur Durchführung des beschriebenen Verfahrens;
- Fig. 5:: eine Art der Datenverarbeitung mit einem beschriebenen Verfahren, dargestellt auf einem Zeitstrahl;
- Fig. 6:: eine weitere Art der Datenverarbeitung mit einem beschriebenen Verfahren, dargestellt auf einem Zeitstrahl, und
- Fig. 7:: noch eine weitere Art der Datenverarbeitung mit einem beschriebenen Verfahren, dargestellt auf einem Zeitstrahl.

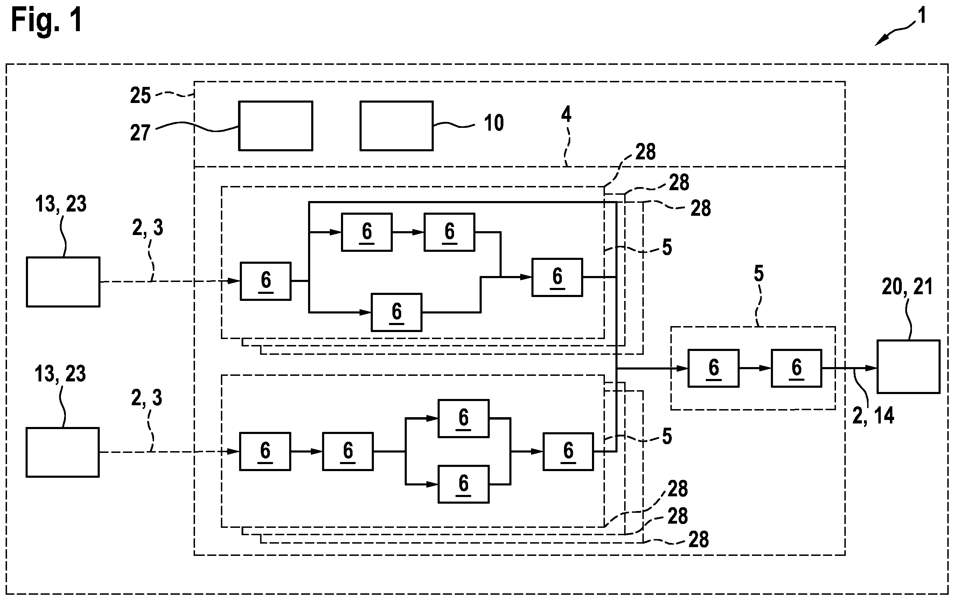

In der Fig. 1 ist schematisch ein Fahrzeug 1 dargestellt. Das Fahrzeug 1 ist insbesondere ein Straßenfahrzeug, beispielsweise ein Personenkraftfahrzeug oder ein Lastkraftfahrzeug. Das Fahrzeug 1 hat Sensoren 23 zum Erfassen von Informationen, wie beispielsweise Umfelddaten aus dem Umfeld des Fahrzeugs 1, die von verschiedenen Fahrerassistenzsystemen genutzt werden können. Solche Systeme können beispielsweise Systeme der aktiven oder passiven Sicherheit oder auch Systeme für einen autonomen (oder teilautonomen) Fahrbetrieb sein. Solche Systeme sind in Fig. 1 als Steuerung 20 dargestellt.

Damit die Steuerung 20 die Daten der Sensoren 23 verarbeiten kann, müssen diese Daten aufbereitet werden. Zu diesem Zweck weist das Fahrzeug 1 ein Datenverarbeitungsnetzwerk 4 auf. Die Sensoren 23 bilden Datenquellen 13 für dieses Datenverarbeitungsnetzwerk 4, welche dem Datenverarbeitungsnetzwerk 4 Sensordaten 3 bereitstellen. Die Steuerung 20 bildet einen Ausgangsdatenempfänger 21 für dieses Datenverarbeitungsnetzwerk 4, welcher Netzwerkausgangsdaten 14 des Datenverarbeitungsnetzwerks 4 empfängt.

Das Datenverarbeitungsnetzwerk 4 besteht aus einer Mehrzahl von Datenverarbeitungsmodulen 5, die jeweils aus (einem oder mehreren) Datenverarbeitungskomponenten 6 bestehen. Hier schematisch angedeutet ist, dass die einzelnen Datenverarbeitungskomponenten 6 jeweils in einer Mehrzahl von Pipelinestufen 28 parallel vorhanden sein können, so dass Datenverarbeitungsaufgaben mit den Datenverarbeitungskomponenten 6 parallel zueinander/überlappend ausgeführt werden können. Das Datenverarbeitungsnetzwerk 4 mit den Datenverarbeitungsmodulen 5 und den Datenverarbeitungskomponenten 6 ist bevorzugt auf einer Hardware 25 realisiert, die insbesondere einen Datenspeicher 27 aufweist, auf welchem das Datenverarbeitungsnetzwerk 4 Daten 2 ablegen kann und welche darüber hinaus verschiedene andere Hardwarefunktionen für das Datenverarbeitungsnetzwerk 4 bereit stellen kann, beispielsweise einen Zeitgeber 10.

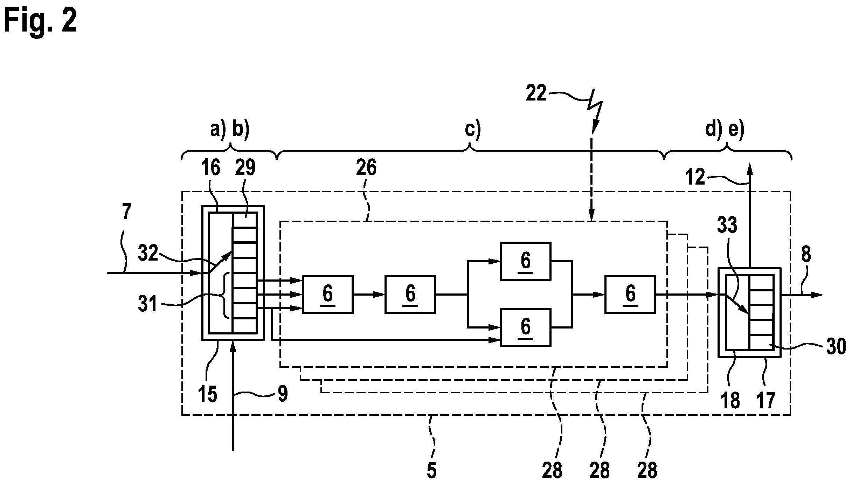

In den Fig. 2 zeigt eine mögliche Ausführungsvariante von Datenverarbeitungsmodulen 5 für das beschriebene Datenverarbeitungsnetzwerk 4. Das beschriebene Verfahren wird jeweils auf der Ebene jedes einzelnen Datenverarbeitungsmoduls 5 durchgeführt. Jedes Datenverarbeitungsmodul 5 hat ein Eingangsdatenempfangsmodul 15 mit einem Eingabespeicher 16 zum Empfangen von Eingangsdaten 7 und ein Ausgangsdatenbereitstellungsmodul 17 mit einem Ausgabespeicher 18 zur Bereitstellung von Ausgangsdaten 8 sowie eine Datenverarbeitungskomponentenstruktur 26 mit Datenverarbeitungskomponenten 6 für die Datenverarbeitung von den Eingangsdaten 7 hin zu den Ausgangsdaten 8. Das Eingangsdatenempfangsmodul 15 kann eine Schnittstelle zum Empfangen eines Stimulus 9 aufweisen mit welchem die Datenverarbeitung mit den Datenverarbeitungskomponenten 6 eingeleitet werden kann. Das Ausgangsdatenbereitstellungsmodul 17 kann eine Schnittstelle zur Abgabe eines Verfügbarkeitssignals 12 aufweisen, wenn die Datenverarbeitung mit den Datenverarbeitungskomponenten 6 abgeschlossen ist und die Ausgangsdaten 8 verfügbar sind.

Die Verfahrensschritte a) und b) des beschriebenen Verfahrens betreffen den Empfang der Eingangsdaten 7 und werden vornehmlich mit dem Eingangsdatenempfangsmodul 15 ausgeführt. Die Verfahrensschritte d) und e) des beschriebenen Verfahrens betreffen die Bereitstellung von Ausgangsdaten 8 und sie werden vornehmlich mit dem Ausgangsdatenbereitstellungsmodul 17 ausgeführt. Die eigentliche Datenverarbeitung geschieht in Schritt c) in den Datenverarbeitungskomponenten 6 , die eine Datenverarbeitungskomponentenstruktur 26 des jeweiligen Datenverarbeitungsmoduls 5 bilden.

Die Implementierung der in Fig. 1 bereits angedeuteten Pipelinestufen 28 ist hier noch etwas detaillierter ausgeführt. Die Pipelinestufen 28 beziehen sich bevorzugt nur auf die Datenverarbeitungskomponenten 6 des Datenverarbeitungsmoduls 5. Alle Pipelinestufen 28 greifen bevorzugt auf ein gemeinsames Eingangsdatenempfangsmodul 15 und ein gemeinsames Ausgangsdatenbereitstellungsmodul 17 zu. Der Eingabespeicher 16 des Eingangsdatenempfangsmoduls 15 und der Ausgabespeicher 18 des Ausgangsdatenbereitstellungsmoduls 17 haben bevorzugt jeweils mehrere Eingangsstufen 29 und Ausgangsstufen 30, die jeweils über einen Eingangsstufenindex 32 bzw. einen Ausgangsstufenindex 33 ansprechbar sind. Bei der Ausführung der Datenverarbeitungsaufgabe in der Datenverarbeitungskomponente 6 in einer Pipelinestufe 28 wird jeweils auf eine Reihe 31 von Eingangsdaten 7 zugegriffen und so ein Satz von Eingangsdaten 7, für die jeweilige Datenverarbeitungsaufgabenbearbeitung definiert. Die Reihe 31 von Eingangsdaten 7, die den Satz von Eingangsdaten 7 bildet, kann mit jedem Eintreffen eines Stimulus verschoben werden. In Ausführungsvarianten hat diese Reihe 31 eine feste Länge. In anderen Ausführungsvarianten betrifft diese Reihe immer nur die zuletzt (seit dem letzten Start einer Ausführung der Datenverarbeitungsaufgabe in einer Pipelinestufe) eingetroffenen Eingangsdaten 7.

In Fig. 2 auch noch (jedoch rein schematisch) dargestellt ist die Möglichkeit eines Abbruchsignals, welche zum Abbruch der Ausführung der Datenverarbeitung in einer Pipelinestufe (28) führt.

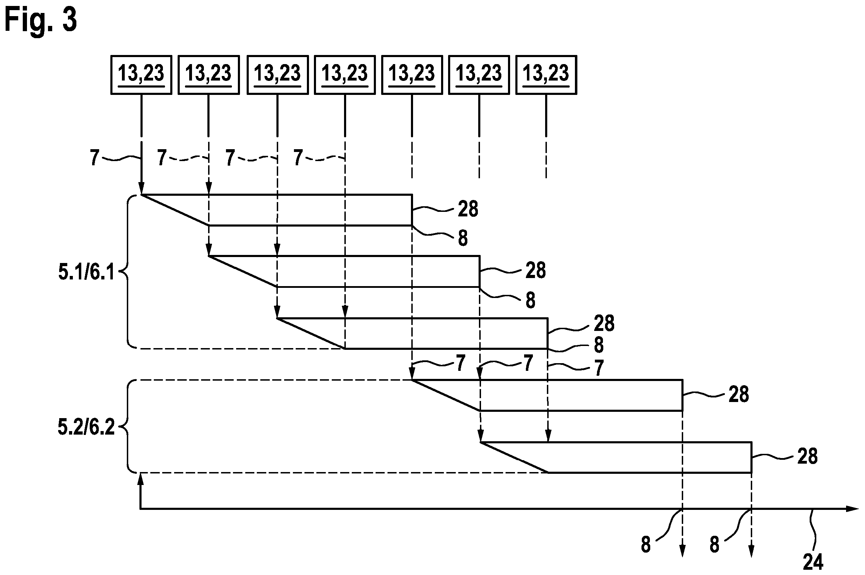

Die Darstellung des Verfahrens auf einem Zeitstrahl 24 in Fig. 3 ermöglicht es die Vorteile der Ausführung des Verfahrens in Pipelinestufen 28 mit Bezug auf die schnellere Verfügbarkeit von Ausgangsdaten durch die Verwendung der Pipelinestufen 28 zu erläutern. Oben in Fig. 3 ist dargestellt, dass Eingangsdaten 7 von Sensoren 23 bzw. aus anderen Datenquellen 13 regelmäßig wiederholt eintreffen. Darunter dargestellt ist die Ausführung von aufeinander aufbauenden Datenverarbeitungsaufgaben in zwei Datenverarbeitungsmodulen 5.1 und 5.2 bzw. den darin jeweils enthaltenen Datenverarbeitungskomponenten 6.1 und 6.2. Dadurch, dass beide Datenverarbeitungsaufgaben jeweils mehrfach parallel ausgeführt werden, können bereits früher Ausgangsdaten 8 bereitgestellt werden. Dies gilt insbesondere, wenn für die Datenverarbeitungsaufgabe jeweils eine Reihe von Eingangsdaten verarbeitet wird, die sequentiell/über einen Zeitraum gestreckt in dem jeweiligen Eingangsdatenempfangsmodul aufläuft.

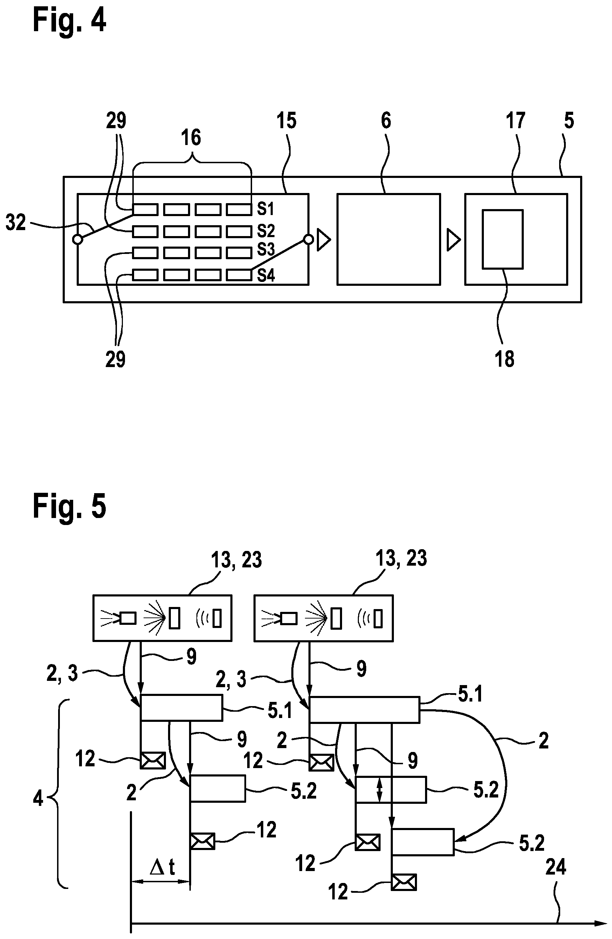

Fig. 4 zeigt eine weitere Darstellung eines Datenverarbeitungsmoduls 5 mit dem Eingangsdatenempfangsmodul 15, den Datenverarbeitungskomponenten 6 und dem Ausgangsdatenbereitstellungsmodul 17. In dem Eingangsdatenempfangsmodul 15 ist der Eingabespeicher 16 für Eingangsdaten detaillierter dargestellt. Zu erkennen ist, dass der Eingabespeicher 16 Eingangsstufen 29 aufweist, die über einen Eingangsstufenindex 32 ansprechbar sind. Schematisch ist hier auch der Ausgabespeicher 18 des Ausgangsdatenbereitstellungsmoduls 17 gezeigt, der entsprechend dem Eingabespeicher 16 aufgebaut sein kann, was hier jedoch nicht im Detail dargestellt ist.

Die Fig. 5, 6 und 7 zeigen verschiedene Art -und Weisen der Datenverarbeitung, die mit dem beschriebenen Datenverarbeitungsnetzwerk 4 bzw. mit dem beschriebenen Verfahren durchgeführt werden können.

Die Darstellungen zeigen jeweils verschiedene Datenverarbeitungsmodule 5,1, 5.2 und/oder 5.3, wobei jeweils die Dauer der Ausführung der Datenverarbeitungen mit den jeweils zu den Datenverarbeitungsmodulen 5 zählenden Datenverarbeitungskomponenten 6 auf dem Zeitstrahl 24 als Balken aufgetragen ist. Jeweils oben schematisch dargestellt sind die Datenquellen 13 (hier jeweils Sensoren 23), mit welchen Daten 2 (hier Sensordaten 3) in das Datenverarbeitungsnetzwerk 4 eingebracht werden können.

Die einzelnen Datenverarbeitungsmodule 5.1, 5.2 und/oder 5.3 sind über den Zeitstrahl 24 hinweg hintereinander mehrfach gezeigt. Hiermit ist dargestellt, dass die einzelnen Datenverarbeitungsmodule 5.1, 5.2 und/oder 5.3 jeweils mehrfach wiederholt ausgeführt werden und dabei jeweils auf andere Eingangsdaten zurückgreifen. Der Start der Ausführung eines der Datenverarbeitungsmodule 5.1, 5.2 und/oder 5.3 erfolgt jeweils, wenn ein Stimulus 9 vorliegt.

Die Fig. 5, 6 und 7 zeigen jeweils unterschiedliche Arten von Stimuli 9, die hier verwendet werden können.

Die Fig. 5 zeigt, dass als Stimuli 9 nur Verfügbarkeitssignale 12 verwendet werden, die eine Verfügbarkeit von Daten für die Durchführung von bestimmten Datenverarbeitungsaufgaben mit Datenverarbeitungsmodulen 5.1, 5.2 und/oder 5.3 anzeigen. Das in Fig. 4 dargestellte Verfahren läuft datentechnisch recht unkontrolliert ab. Sobald neue Daten verfügbar sind, startet die Ausführung der jeweiligen Datenverarbeitungsmodule 5.1, 5.2 und/oder 5.3. Hierdurch wird zwar eine hohe Verarbeitungsgeschwindigkeit realisiert. Es existiert aber auch eine stark reduzierte Nachvollziehbarkeit, welche Daten von dem jeweiligen Datenverarbeitungsmodul 5.1, 5.2 und/oder 5.3 verarbeitet wurden. Dies gilt insbesondere, weil die Dauer der Datenverarbeitungen mit den Datenverarbeitungsmodulen 5.1, 5.2 und/oder 5.3 nicht genau vorhergesagt werden kann und damit keine bzw. nur eine geringe Reproduzierbarkeit besteht, welches Datenverarbeitungsmodul 5.1, 5.2 und/oder 5.3 auf welche Eingangsdaten reagiert. Mit "Reproduzierbarkeit" ist hier eine Reproduzierbarkeit der Datenverarbeitung mit dem Datenverarbeitungsnetzwerk 4 gemeint. In diesem Zusammenhang ist mit einer geringen Reproduzierbarkeit gemeint, dass ein sehr hoher Aufwand betrieben werden muss, um die Datenverarbeitung mit den einzelnen Datenverarbeitungsmodulen 5.1, 5.2 und/oder 5.3 nachzuvollziehen, wie dies beispielsweise für Debugging-Aufgaben oder für Aufgaben zur Absicherung der Korrektheit der Datenverarbeitung in redundanten Systemen erforderlich ist.

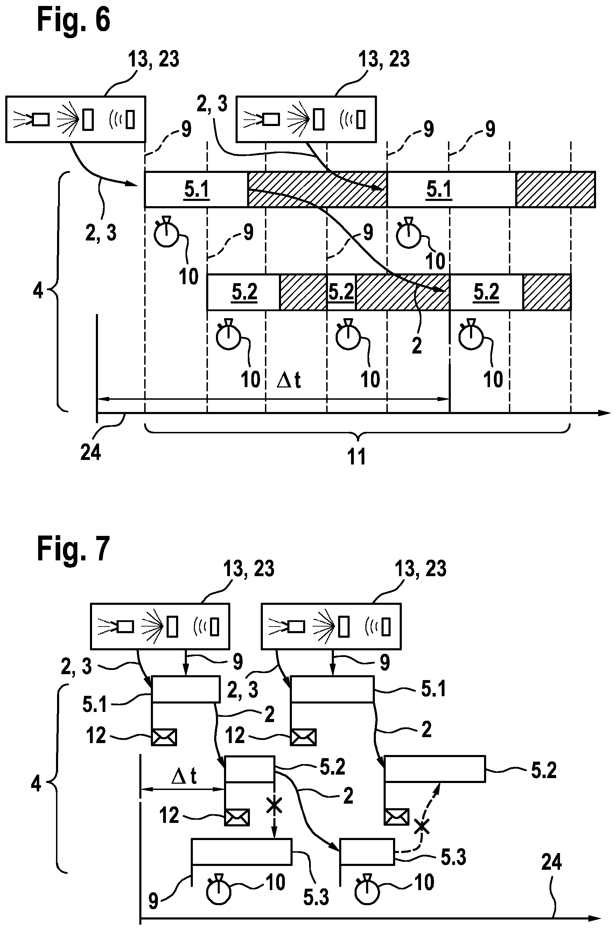

Die Fig. 6 zeigt, das als Stimuli 9 jeweils Signale eines Zeitgebers 10 verwendet werden, die einem festen Zeitraster 11 folgen. Durch solche Stimuli 9 zur Auslösung der Datenverarbeitung mit den Datenverarbeitungsmodulen 5.1, 5.2 und/oder 5.3 kann erreicht werden, dass immer genau bekannt ist, mit welchen Eingangsdaten die Datenverarbeitung mit den Datenverarbeitungsmodulen 5.1, 5.2 und/oder 5.3 startet. Hierdurch wird eine hohe Reproduzierbarkeit im oben genannten Sinne erreicht - gleichzeitig wird jedoch die Leistungsfähigkeit des Datenverarbeitungsnetzwerks 4 drastisch reduziert. Mit der Leistungsfähigkeit des Datenverarbeitungsnetzwerks 4 ist hier die Fähigkeit des Datenverarbeitungsnetzwerks 4 gemeint, mit möglichst geringen Hardware-Ressourcen betrieben werden zu können. Weil jeweils sichergestellt werden muss, dass die Datenverarbeitung mit einem Datenverarbeitungsmodul (bspw. Datenverarbeitungsmodul 5.1) abgeschlossen ist, bevor ein Start eines weiteren Datenverarbeitungsmoduls erfolgt, welches Ausgangsdaten 8 des ersten Datenverarbeitungsmoduls als Eingangsdaten verarbeitet (bspw. Datenverarbeitungsmodul 5.2). Weil die Dauer der Datenverarbeitung mit den Datenverarbeitungsmodule 5.1, 5.2 und/oder 5.3 nicht genau vorhergesagt werden kann, muss eine ausreichende Auslegung des Zeitrasters anhand einer längsten möglichen Ausführungsdauer erfolgen.

Die Ausführungsvarianten gemäß Fig. 7 kombiniert Aspekte der Ausführungsvarianten gemäß Fig. 5 und 6, um einerseits eine hohe Reproduzierbarkeit und andererseits eine gute Leistungsfähigkeit zu erreichen. In dem Datenverarbeitungsnetzwerk 4 wird je nach Aufgabe mit Verfügbarkeitssignalen 12 oder mit Zeitgebern 10 als Stimulus 9 gearbeitet.

## Patentansprüche

1. Verfahren für die Verarbeitung von Sensordaten (3) in einem Fahrzeug (1), mit einem Datenverarbeitungsnetzwerk (4) umfassend eine Mehrzahl von Datenverarbeitungsmodulen (5), die jeweils mindestens eine Datenverarbeitungskomponente (6) umfassen, wobei jede Datenverarbeitungskomponente (6) für eine definierte Datenverarbeitungsaufgabe zur Verarbeitung der Daten (2) eingerichtet ist, wobei jedes Datenverarbeitungsmodul (5) als Eingangsdaten (7) Daten (2) aus mindestens einer Datenquelle (13) und/oder Ausgangsdaten (8) weiterer Datenverarbeitungsmodule (5) erhält und Ausgangsdaten (8) erzeugt, welche Netzwerksausgangsdaten (14) des Datenverarbeitungsnetzwerks (4) und/oder Eingangsdaten (7) weiterer Datenverarbeitungsmodule (5) sind, **dadurch gekennzeichnet, dass** in dem Verfahren für mindestens ein Datenverarbeitungsmodul (5) die folgenden Schritte durchgeführt werden:
a) Empfangen mindestens eines Satzes von Eingangsdaten (7) zur Durchführung der Datenverarbeitungsaufgaben in der mindestens einen Datenverarbeitungskomponente (6) des jeweiligen Datenverarbeitungsmoduls (5);
b) Empfangen eines Stimulus (9) zur Aktivierung der mindestens einen Datenverarbeitungskomponente (6) des Datenverarbeitungsmoduls (5) und Zuordnen einer Pipelinestufe (28) der mindestens einen Datenverarbeitungskomponente (6), wobei der Stimulus (9) von einer Kombination bestehend aus einem Zeitgeber (10) und einem Verfügbarkeitssignal (12) gebildet wird,
- wobei der Zeitgeber (10) ein Zeitraster (11) zur regelmäßigen Wiederholung der Durchführung der Datenverarbeitungsaufgaben mit den Datenverarbeitungskomponenten (6) vorgibt,
- wobei ein Verfügbarkeitssignal (12) die Verfügbarkeit von Daten (2) anzeigt,
so dass dann, wenn neue Daten über ein Verfügbarkeitssignal (12) angezeigt werden, das Datenverarbeitungsmodul in die Bereitschaft versetzt wird, auf den Zeitgeber zu reagieren und dass nur wenn sowohl der Zeitgeber (10) als auch das (mindestens eine) Verfügbarkeitssignal (12) anzeigen, dass mit einer Datenverarbeitung gestartet werden soll, der Stimulus (9) zur Aktivierung der mindestens einen Datenverarbeitungskomponente (6) des Datenverarbeitungsmoduls (5) erzeugt wird;
c) Wenn in Schritt a) der Satz von Eingangsdaten (7) und in Schritt b) der Stimulus (9) empfangen wurde: Aktivieren der Pipelinestufe (28) der mindestens einen Datenverarbeitungskomponente (6) des Datenverarbeitungsmoduls (5) und Durchführung der Datenverarbeitungsaufgabe für die die Datenverarbeitungskomponente (6) eingerichtet ist mit den jeweiligen Eingangsdaten (7) zur Erzeugung von Ausgangsdaten (8); und
d) Bereitstellung der Ausgangsdaten (8) zur weiteren Datenverarbeitung und/oder als Netzwerksausgangsdaten (14).

2. Verfahren nach einem der vorhergehenden Ansprüche, wobei die Verfahrensschritte a) bis d) mehrfach wiederholt derart ausgeführt werden, dass in mehreren Pipelinestufen (28) die Datenverarbeitungsaufgabe in Verfahrensschritt c) versetzt parallel zueinander ausgeführt wird.

3. Verfahren nach einem der vorhergehenden Ansprüche, wobei Schritt a) mit einem Eingangsdatenempfangsmodul (15) des Datenverarbeitungsmoduls (5) durchgeführt wird, welches einen Eingabespeicher (16) zur Zwischenspeicherung von noch nicht vollständigen Eingangsdaten (7) aufweist und welches eine Vollständigkeitsprüfung des Satzes von Eingangsdaten (7) durchführt .

4. Verfahren nach Anspruch 3, wobei der Eingabespeicher (16) des Eingangsdatenempfangsmodul (15) mehrere Eingangsstufen (29) zur Ablage von Eingangsdaten (7) aufweist, wobei zwischen dem Empfang von verschiedenen Eingangsdaten (7) ein Wechsel der Eingangsstufe (29) erfolgt, so dass in dem Eingangsdatenempfangsmodul (15) eine Reihe (31) von zuletzt empfangenen von Eingangsdaten (7) zur Verfügung steht, wobei mindestens ein Satz von Eingangsdaten (7) durch einen Zugriff auf in dem Eingangsspeicher hinterlegte Eingangsdaten (7) als Folge des Empfangs eines Stimulus (9) in Schritt b) festgelegt wird .

5. Verfahren nach Anspruch 4, wobei die mindestens eine Datenverarbeitungskomponente (6) dazu eingerichtet ist eine Reihe (31) von zuletzt empfangenen Eingangsdaten (7) als Satz von Eingangsdaten (7) zusammen zu verarbeiten, um Ausgangsdaten (8) zu erzeugen.

6. Verfahren nach Anspruch 4 , wobei eine Eingangsstufe (29) über einen Eingangsstufenindex (32) ansprechbar ist, welcher ausgelöst durch den Empfang eines Stimulus (9) in Schritt b) modifiziert wird.

7. Verfahren nach einem der vorergehenden Ansprüche, wobei Schritt d) mit einem Ausgangsdatenbereitstellungsmodul (17) durchgeführt wird, welches einen Ausgabespeicher (18) aufweist in welchem eine Zwischenspeicherung von noch nicht vollständigen Ausgangsdaten (8) erfolgt.

8. Verfahren nach Anspruch 7, wobei der Ausgabespeicher (18) des Ausgangsdatenbereitstellungsmoduls (17) mehrere Ausgangsstufen (30) zur Ablage eines Satzes von Ausgangsdaten (8) aufweist.

9. Verfahren nach einem der vorhergehenden Ansprüche, wobei in Schritt d) bereitgestellte Ausgangsdaten (8) zumindest teilweise als Eingangsdaten (7) für eine erneute Durchführung der Verfahrensschritte a) bis d) mit demselben Datenverarbeitungsmodul (5) verwendet werden.

10. Verfahren nach einem der vorhergehenden Ansprüche, wobei die in Schritt d) bereitgestellten Ausgangsdaten (8) Teildatenmengen (19) umfassen, die von verschiedenen Datenverarbeitungskomponenten (6) des Datenverarbeitungsmoduls (5) bei der Durchführung der Datenverarbeitungsaufgaben erzeugt werden, wobei die Bereitstellung der Ausgangsdaten (8) in Schritt d) erst erfolgt, wenn alle die Ausgangsdaten (8) bildenden Teildatenmengen (19) verfügbar sind.

11. Verfahren nach einem der vorhergehenden Ansprüche, wobei in Schritt d) zusätzlich ein Verfügbarkeitssignal (12) erzeugt wird, anhand von welchem erkennbar ist, dass Ausgangsdaten (8) zur weiteren Verarbeitung bereitgestellt wurden.

12. Verfahren nach einem der vorhergehenden Ansprüche, wobei während Schritt c) optional folgender Schritt durchgeführt wird:
- Abbruch der Durchführung der Datenverarbeitungsaufgabe in einer Pipelinestufe (28), und Neustart von Schritt c) mit anderen Eingangsdaten (7), wenn ein Abbruchsignal (22) empfangen wurde.

13. Datenverarbeitungsmodul (5) für ein Datenverarbeitungsnetzwerk (4) zur Durchführung des Verfahrens nach einem der vorhergehenden Ansprüche aufweisend eine Eingangsdatenempfangsmodul (15), welchem ein Eingabespeicher (16) zugeordnet ist und ein Ausgangsdatenbereitstellungsmodul (17), welchem ein Ausgabespeicher (18) zugeordnet ist, sowie weiter aufweisend mindestens eine Datenverarbeitungskomponente (6) zur Durchführung einer Datenverarbeitungsaufgabe basierend auf den Eingangsdaten (7) in dem Eingabespeicher (16) und zur Erzeugung von Ausgangsdaten (8) zur Ablage in dem Ausgabespeicher (18).

14. Datenverarbeitungsmodul (5) nach Anspruch 13, wobei zumindest der Eingabespeicher (16) oder der Ausgabespeicher (18) mehrere Stufen (29,30) zur Ablage eines Satzes von Eingangsdaten (7) oder Ausgangsdaten (8) aufweist.

15. Datenverarbeitungsnetzwerk (4) umfassend eine Mehrzahl von Datenverarbeitungsmodulen (5) nach Anspruch 13 oder 14.

## Claims

1. Method for processing sensor data (3) in a vehicle (1) with a data processing network (4) comprising a plurality of data processing modules (5), each comprising at least one data processing component (6), wherein each data processing component (6) is configured for a defined data processing task for processing the data (2), wherein each data processing module (5) receives data (2) from at least one data source (13) and/or output data (8) from further data processing modules (5) as input data (7) and generates output data (8) which are network output data (14) from the data processing network (4) and/or input data (7) of further data processing modules (5), **characterized in that** the following steps are carried out in the method for at least one data processing module (5):
a) receiving at least one set of input data (7) for carrying out the data processing tasks in the at least one data processing component (6) of the respective data processing module (5);
b) receiving a stimulus (9) for activating the at least one data processing component (6) of the data processing module (5) and assigning a pipeline stage (28) of the at least one data processing component (6), wherein the stimulus (9) is formed by a combination consisting of a timer (10) and an availability signal (12),
- wherein the timer (10) specifies a time pattern (11) for regularly repeating the performance of the data processing tasks with the data processing components (6),
- wherein an availability signal (12) indicates the availability of data (2),
such that, when new data are indicated via an availability signal (12), the data processing module is primed to react to the timer and the stimulus (9) for activating the at least one data processing component (6) of the data processing module (5) is generated only when both the timer (10) and the (at least one) availability signal (12) indicate that data processing is to be started;
c) if the set of input data (7) was received in step a) and the stimulus (9) was received in step b): activating the pipeline stage (28) of the at least one data processing component (6) of the data processing module (5) and performing the data processing task for which the data processing component (6) is configured with the respective input data (7) in order to generate output data (8); and
d) providing the output data (8) for further data processing and/or as network output data (14).

2. Method according to one of the preceding claims, wherein method steps a) to d) are repeatedly carried out multiple times in such a way that the data processing task in method step c) is performed in an offset manner in parallel with each other in a plurality of pipeline stages (28).

3. Method according to one of the preceding claims, wherein step a) is carried out with an input data receiving module (15) of the data processing module (5), which has an input memory (16) for buffering input data (7) that are not yet complete and which carries out a completeness check of the set of input data (7).

4. Method according to Claim 3, wherein the input memory (16) of the input data receiving module (15) has a plurality of input stages (29) for storing input data (7), wherein the input stage (29) is changed between the reception of different input data (7) such that a series (31) of input data (7) received last is available in the input data receiving module (15), wherein at least one set of input data (7) is determined by accessing input data (7) stored in the input memory as a result of a stimulus (9) being received in step b).

5. Method according to Claim 4, wherein the at least one data processing component (6) is configured to process a series (31) of input data (7) received last together as a set of input data (7) in order to generate output data (8).

6. Method according to Claim 4, wherein an input stage (29) can be addressed via an input stage index (32) which is modified when triggered by the reception of a stimulus (9) in step b).

7. Method according to one of the preceding claims, wherein step d) is carried out with an output data provision module (17) which has an output memory (18) in which output data (8) that are not yet complete are buffered.

8. Method according to Claim 7, wherein the output memory (18) of the output data provision module (17) comprises a plurality of output stages (30) for storing a set of output data (8).

9. Method according to one of the preceding claims, wherein output data (8) provided in step d) are at least partially used as input data (7) for carrying out method steps a) to d) again with the same data processing module (5).

10. Method according to one of the preceding claims, wherein the output data (8) provided in step d) comprise data subsets (19) which are generated by various data processing components (6) of the data processing module (5) when performing the data processing tasks, wherein the output data (8) are provided in step d) only when all the data subsets (19) forming the output data (8) are available.

11. Method according to one of the preceding claims, wherein an availability signal (12) is additionally generated in step d), by means of which it is possible to detect that output data (8) have been provided for further processing.

12. Method according to one of the preceding claims, wherein the following step is optionally carried out during step c):
- aborting the performance of the data processing task in a pipeline stage (28), and restarting step c) with other input data (7), when an abort signal (22) has been received.

13. Data processing module (5) for a data processing network (4) for carrying out the method according to one of the preceding claims, comprising an input data receiving module (15), to which an input memory (16) is assigned, and an output data provision module (17), to which an output memory (18) is assigned, and further comprising at least one data processing component (6) for performing a data processing task based on the input data (7) in the input memory (16) and for generating output data (8) for storage in the output memory (18).

14. Data processing module (5) according to Claim 13, wherein at least the input memory (16) or the output memory (18) has a plurality of stages (29,30) for storing a set of input data (7) or output data (8).

15. Data processing network (4) comprising a plurality of data processing modules (5) according to Claim 13 or 14.

## Revendications

1. Procédé de traitement de données de capteur (3) dans un véhicule (1), comprenant un réseau de traitement de données (4) comportant une pluralité de modules de traitement de données (5) qui comprennent chacun au moins un composant de traitement de données (6), chaque composant de traitement de données (6) étant configuré pour une tâche de traitement de données définie servant à traiter les données (2), chaque module de traitement de données (5) recevant des données (2) en tant que données d'entrée (7) en provenance d'au moins une source de données (13) et/ou des données de sortie (8) en provenance d'autres modules de traitement de données (5) et générant des données de sortie (8) qui sont des données de sortie de réseau (14) du réseau de traitement de données (4) et/ou des données d'entrée (7) d'autres modules de traitement de données (5), **caractérisé en ce que**, selon le procédé, les étapes suivantes sont effectuées pour au moins un module de traitement de données (5) :
a) réception d'au moins un ensemble de données d'entrée (7) pour l'exécution des tâches de traitement de données dans ledit au moins un composant de traitement de données (6) du module de traitement de données (5) respectif ;
b) réception d'un stimulus (9) pour activer ledit au moins un composant de traitement de données (6) du module de traitement de données (5) et attribution d'un étage de pipeline (28) audit au moins un composant de traitement de données (6), le stimulus (9) étant formé par une combinaison d'un temporisateur (10) et d'un signal de disponibilité (12),
- dans lequel le temporisateur (10) prédéfinit une trame temporelle (11) pour la répétition régulière de l'exécution des tâches de traitement de données à l'aide des composants de traitement de données (6),
- dans lequel un signal de disponibilité (12) indique la disponibilité de données (2),
de telle sorte que, lorsque de nouvelles données sont indiquées par l'intermédiaire d'un signal de disponibilité (12), le module de traitement de données est mis en état de préparation pour réagir au temporisateur et que, seulement lorsque le temporisateur (10) et ledit (au moins un) signal de disponibilité (12) indiquent qu'un traitement de données doit être démarré, le stimulus (9) destiné à activer ledit au moins un composant de traitement de données (6) du module de traitement de données (5) est généré ;
c) lorsque l'ensemble de données d'entrée (7) a été reçu lors de l'étape a) et lorsque le stimulus (9) a été reçu lors de l'étape b) : activation de l'étage de pipeline (28) dudit au moins un composant de traitement de données (6) du module de traitement de données (5) et exécution de la tâche de traitement de données pour laquelle le composant de traitement de données (6) est configuré, avec les données d'entrée (7) respectives pour générer des données de sortie (8) ; et
d) fourniture des données de sortie (8) pour un traitement ultérieur de données et/ou en tant que données de sortie de réseau (14).

2. Procédé selon l'une quelconque des revendications précédentes, dans lequel les étapes de procédé a) à d) sont exécutées de manière répétée plusieurs fois, de telle sorte que, dans plusieurs étages de pipeline (28), la tâche de traitement de données de l'étape de procédé c) est exécutée en parallèle aux autres tâches.

3. Procédé selon l'une des revendications précédentes, dans lequel l'étape a) est exécutée avec un module de réception de données d'entrée (15) du module de traitement de données (5), lequel module de réception de données d'entrée comporte une mémoire d'entrée (16) pour la mise en mémoire tampon de données d'entrée (7) encore incomplètes et qui effectue un contrôle d'exhaustivité de l'ensemble de données d'entrée (7).

4. Procédé selon la revendication 3, dans lequel la mémoire d'entrée (16) du module de réception de données d'entrée (15) comporte une pluralité d'étages d'entrée (29) pour le stockage de données d'entrée (7), dans lequel un changement d'étage d'entrée (29) est effectué entre la réception de différentes données d'entrée (7), de sorte qu'une série (31) de données d'entrée (7) reçues le plus récemment est disponible dans le module de réception de données d'entrée (15), au moins un ensemble de données d'entrée (7) étant défini par un accès aux données d'entrée (7) stockées dans la mémoire d'entrée à la suite à la réception d'un stimulus (9) lors de l'étape b).

5. Procédé selon la revendication 4, dans lequel ledit au moins un composant de traitement de données (6) est configuré pour traiter ensemble une série (31) de données d'entrée (7) reçues le plus récemment en tant qu'ensemble de données d'entrée (7) afin de générer des données de sortie (8).

6. Procédé selon la revendication 4, dans lequel un étage d'entrée (29) peut être adressé par l'intermédiaire d'un index d'étage d'entrée (32) qui est modifié, de manière déclenchée par la réception d'un stimulus (9) lors de l'étape b).

7. Procédé selon l'une quelconque des revendications précédentes, dans lequel l'étape d) est exécutée à l'aide d'un module de fourniture de données de sortie (17) qui comporte une mémoire de sortie (18) dans laquelle des données de sortie (8) encore incomplètes sont mises en mémoire tampon.

8. Procédé selon la revendication 7, dans lequel la mémoire de sortie (18) du module de fourniture de données de sortie (17) comporte une pluralité d'étages de sortie (30) pour stocker un ensemble de données de sortie (8).

9. Procédé selon l'une quelconque des revendications précédentes, dans lequel des données de sortie (8) fournies lors de l'étape d) sont utilisées au moins partiellement comme données d'entrée (7) pour une nouvelle exécution des étapes de procédé a) à d) à l'aide du même module de traitement de données (5).

10. Procédé selon l'une quelconque des revendications précédentes, dans lequel les données de sortie (8) fournies lors de l'étape d) comprennent des sous-ensembles de données (19) qui sont générés par différents composants de traitement de données (6) du module de traitement de données (5) lors de l'exécution des tâches de traitement de données, la fourniture des données de sortie (8) lors de l'étape d) n'ayant lieu que lorsque tous les sous-ensembles de données (19) formant les données de sortie (8) sont disponibles.

11. Procédé selon l'une quelconque des revendications précédentes, dans lequel, lors de l'étape d), un signal de disponibilité (12) est généré de manière supplémentaire, à partir duquel il est reconnaissable que des données de sortie (8) ont été fournies pour un traitement ultérieur.

12. Procédé selon l'une quelconque des revendications précédentes, dans lequel, pendant l'étape c), l'étape suivante est exécutée facultativement :
- interruption de l'exécution de la tâche de traitement de données dans un étage de pipeline (28), et redémarrage de l'étape c) avec d'autres données d'entrée (7) lorsqu'un signal d'interruption (22) a été reçu.

13. Module de traitement de données (5) pour un réseau de traitement de données (4) destiné à mettre en œuvre le procédé selon l'une quelconque des revendications précédentes, comprenant un module de réception de données d'entrée (15), auquel est associée une mémoire d'entrée (16), et un module de fourniture de données de sortie (17), auquel est associée une mémoire de sortie (18), au moins un composant de traitement de données (6) destiné à exécuter une tâche de traitement de données sur la base des données d'entrée (7) se trouvant dans la mémoire d'entrée (16) et à générer des données de sortie (8) destinées à être stockées dans la mémoire de sortie (18).

14. Module de traitement de données (5) selon la revendication 13, dans lequel au moins la mémoire d'entrée (16) ou la mémoire de sortie (18) comporte une pluralité d'étages (29, 30) pour le stockage d'un ensemble de données d'entrée (7) ou de données de sortie (8).

15. Réseau de traitement de données (4) comprenant une pluralité de modules de traitement de données (5) selon la revendication 13 ou 14.
